# EUROPEAN PATENT APPLICATION

(11) **EP 4 711 833 A1**
(43) Date of publication of application: **18.03.2026**
(21) Application number: 24199868.1
(22) Date of filing: 11.09.2024
(51) Int. Cl.: G02B 21/36, G02B 21/00

(54) **OPTICAL SYSTEM FOR A LIGHTSHEET MICROSCOPE**

(71) Applicant: Leica Microsystems CMS GmbH, 35578 Wetzlar (DE)
(72) Inventor: SCHMITZ, Alexander, 35578 Wetzlar (DE); RITSCHEL, Kai, 35578 Wetzlar (DE)
(74) Representative: Maiwald GmbH

(57) **Abstract**

The present disclosure provides an optical system for a lightsheet microscope, the optical system comprising a processor configured to carry out a method for determining a volume of interest, VOI, in a sample, the method comprising processing scanning image data obtained by scanning through the sample with a lightsheet in at least one scanning direction, wherein processing the scanning image data comprises determining borders of an object in the scanning image data along at least two axes; and defining a proposed volume of interest, VOI, based on the determined borders such that the borders along each of the at least two axes are included in the proposed volume of interest, VOI.

## Description

### TECHNICAL FIELD

The present application is directed to an optical system for a lightsheet microscope and a method for determining a volume of interest in a sample, a computer program, and a computer readable medium.

### BACKGROUND

Determining a volume of interest comprising objects to be analysed in a sample allows for reduced analysis time when carrying out analysis, e.g. in microscopy applications, particularly as the analysis will not have to include the entire sample.

Lightsheet microscopy is usually applied for transparent samples. In this case, it can be particularly difficult to identify a volume of interest because it difficult to identify the object visually and the object extending in a depth direction further complicates the identification of the extent of the object.

In general, determining a volume of interest in a sample, e.g. for carrying out sample analysis in the volume of interest, is thus challenging. Known methods for selecting a volume of interest are often based on a user manually selecting the volume of interest based on visual assessment and their expertise. This has the risk of being rather imprecise and may lead to a large error margin or trial and error being involved in the analysis.

However, there are no automated methods that can replace this manual selection of the volume of interest with adequate precision, among others for the reasons explained above, which not only hinder user-based selection, but similarly make it difficult to employ automated techniques for identifying a volume of interest with required accuracy.

Accordingly, it is an object of the present disclosure to provide a way of determining a volume of interest in a sample with higher accuracy and speed.

### SUMMARY

The disclosure provides an optical system, a method, a computer program, and a computer-readable medium according to the independent claims. Preferred embodiments are set out in the dependent claims.

The present disclosure provides an optical system for a lightsheet microscope, the optical system comprising a processor configured to carry out a method for determining a volume of interest, VOI, in a sample. The method comprises processing scanning image data obtained by scanning through the sample with a lightsheet in at least one scanning direction. The processing the scanning image data comprises determining borders of an object in the scanning image data along at least two axes; and defining a proposed volume of interest, VOI, based on the determined borders such that the borders along each of the at least two axes are included in the proposed volume of interest, VOI.

An advantage of the approach of the present disclosure is that a VOI can be identified fast and accurately. The inventors found that use of the scanning data from optical system itself surprisingly allows for accurate and fast determination of a proposed volume of interest. Thus, the present disclosure addresses the challenges outlined above and provides a way of determining a volume of interest with higher accuracy and speed.

The proposed VOI may optionally also be defined such that multiple objects in the scanning image data are included in the proposed volume of interest, which will be explained in more detail below.

A sample may be a liquid and/or gel-like and/or solid volume of material. The acquisition of the scanning image data may take place with the sample arranged, for example, in a well, e.g. of a well plate, or on a top surface of a microscope slide, or other support structures suitable for lightsheet microscopy applications. A sample may, for example be a sample comprising objects, such as organoids. The sample may comprise the objects, e.g. organoids, suspended in gel or liquid, for example.

A volume of interest, according to the present disclosure, may be a part of the volume of the sample. Criteria for defining a proposed volume of interest, such as which and/or how many objects should be included in the volume of interest, may be predefined. Such criteria will depend on the use case at hand, such as the objects to be analysed.

The object to be analysed may, for example, be an organoid or the like.

Known image processing methods for object detection may be employed for determining the borders of the object. Such methods may rely on different parameters associated with neighboring pixels. Objects may be determined using focus-based and/or contrast-based image processing techniques. Machine learning may also be employed for object detection.

The borders being included in the VOI, according to the present disclosure, may comprise the VOI extending at least to the borders, or, in other words, the border of the VOI matching or extending beyond said borders.

At least a subset of the borders of the object may form outer borders of the proposed VOI. Alternatively or in addition, the outer borders of the proposed VOI may be shifted, along the respective axis, by a predetermined amount from the borders of the object, in particular outwardly from the object. In case multiple objects are to be included in the VOI, the outer borders of the VOI may comprise a subset of borders of each of the objects and/ or may be shifted, along the respective axis, by a predetermined amount from the borders of a subset of borders of each of the objects.

The at least two axes may be exactly two axes, for example X and Z axes, Y and Z axes, or X and Y axes, or may be three axes, for example the X, Y, and Z axes. As an example, if the entire sample is inside the line length of a microscope, the VOI need not necessarily be limited in that dimension for practical purposes, as (in that dimension) the entire sample will automatically be imaged, irrespective of setting any borders of a VOI.

An axis may be seen has having two directions that define a dimension along the axis.

Based on the borders along the two or more axes, the proposed VOI may be defined based on a predetermined rule, such as by defining a VOI of a predetermined shape, such as of a rectangular or cuboid shape, or a circular or spherical shape, or the like. The processor may be configured to determine the proposed VOI by fitting the predetermined shape to all or a subset of the borders. A subset of borders of an object may, for example, be selected if multiple objects are to be included in the proposed volume of interest and/or if the proposed volume of interest is subject to boundary conditions, such as limited size along an axis.

The VOI may not necessarily be defined by a full 3D shape. As an example, a subset of its border coordinates may defined the VOI, This may be sufficient if the VOI is used for certain purposes, such as selecting settings for a subsequent analysis, and in particular where the VOI need not be rendered and displayed for a user.

The light sheet microscope may be an oblique plane microscope, OPM.

In lightsheet microscopy, for example fluorescence lightsheet miscroscopy, a lightsheet, e.g. an expanded laser beam may be scanned through the sample. The lightsheet generally may be non-parallel with respect to the sample surface and the scanning direction. In fluorescence lightsheet microscopy, fluorescence light emitted from the sample due to the light sheet may be detected.

The scanning image data may be image data acquired with the lightsheet oriented obliquely with respect to the sample surface.

The scanning image data may be scanning image data received directly from a scanning process and/or retrieved from a data storage system, which may be a local and/or remote system, and may optionally be a distributed system.

As will be described in detail below, the scanning image data may, for example, comprise scanning image data obtained by moving the sample, e.g. by moving a stage onto which the sample is mounted and/or by moving an optical component, specifically a scanner mirror, also referred to as galvanometer mirror hereinbelow, as explained further below.

According to the present disclosure, the proposed VOI may be automatically selected as the VOI or may be presented to a user for user selection. Automatically selecting the proposed VOI as the VOI may be carried out without user interaction. This allows for proceeding quickly and, depending on the case at hand, still provides sufficiently accurate results. Presenting the proposed VOI to a user for user selection may be carried out in the manner described in more detail further below. A user interface may be employed for this step and the proposed VOI fmay be rendered and displayed via the user interface.

According to the present disclosure, processing the scanning image data may comprise at least two of: determining a first border of an object in the sample in the scanning image data along a first axis parallel to the sample surface and deriving a beginning and an end of the object along the first axis; determining a second border of the object in the scanning image data along a second axis parallel to the sample surface and different from the first axis and deriving a beginning and an end of the object along the second axis; and determining a third border of the object in the scanning image data along a third axis perpendicular to the sample surface, which may be referred to as a Z-axis, and deriving a beginning and an end of the object along the third axis. Defining the proposed volume of interest, VOI, may comprise defining a volume that extends at least from the beginning to the end of the object along the respective axis, e.g. each of the first axis, the second axis, and the third axis, as the proposed volume of interest, VOI.

In particular, the first axis may be perpendicular to the second axis and/or the third axis. Optionally, the first axis, the second axis, or the third axis may be parallel to the scanning direction. The first and second axes may be referred to as X-axis and Y-axis hereinbelow.

According to the present disclosure defining the proposed volume of interest, VOI, may comprise defining a volume that extends at least from the beginning to the end of the object along each of the first axis, the second axis, and the third axis. In many cases, it may suffice to use only two axes, as a line length (e.g. the width of the detector and/or light sheet) may provide sufficient coverage along one axis, e.g., cover essentially the entire sample along said axis. Thus, as an example, it may suffice to determine dimensions of the proposed VOI only along the other two dimensions.

A beginning and an end of the object along an axis, given a direction parallel to the axis, may be the first and second border, respectively. If a scanning direction is the same as said direct, the beginning will be scanned prior to the end.

According to the present disclosure, the at least one scanning direction S may be parallel to at least one of the first axis, the second axis, and the third axis. That is, borders along said parallel axis/axes, particularly a beginning and an end, of an object may be determined in the same direction as the scanning direction. For practical purposes, the dimension of the object and corresponding VOI in the scanning direction is particularly important for subsequent analysis of the object. Accordingly, its appropriate determination will yield improved overall results.

According to the present disclosure, the scanning image data may comprise a first plurality of images acquired by moving a sample stage in a direction, which may be referred to as scanning direction S, parallel to a sample surface of the sample, thereby scanning through the sample with a lightsheet. Alternatively or in addition, a second plurality of images acquired while moving the lightsheet by actuating one or more optical components to move the lightsheet through the sample. The optical components may, for example, comprise a scanner mirror, also referred to as galvanometer mirror.

Scanning a sample is commonly done by moving the lightsheet by actuating an optical component, e.g. a galvanometer mirror. This allows for fast and precise scanning. On order to extend the range that can be scanned, the range may be extended by moving the sample stage during scanning or inbetween scanning.

As an example where both the optical component, and accordingly the light sheet, and the sample stage are moved, the optical component may be driven continuously, and the stage may be driven step-wise. The scan may be carried out during the respective dead times of the stage to obtain scanning image data by actuating the optical component, e.g. the second plurality of images. Optionally, scanning may also be carried out while moving the stage, e.g. to obtain the first plurality of images.

The processing of the scanning image data may comprise stitching the images of the scanning image data and determining the borders of the object in the stitched volume. Determination of borders and a proposed VOI in a stitched volume may be particularly advantageous when the stage is moved as part of the image acquisition.

According to the present disclosure, processing the scanning image data may comprise determining the borders in each of at least one of the first plurality of images individually and/ determining the borders in each of at least one of the second plurality of images individually. In other words, the borders may be determined in each of at least a subset of the first plurality of images and/or second plurality of images individually, wherein the subset may be a single one of the first plurality of images and/or second plurality of images, respectively. In this scenario, image stitching may be omitted. This is less computationally expensive and has lower requirements as to the available images. For example, stitching may require sufficient overlap of image data.

In this example, stitching is not required for determining the borders. That is, in this example, no stitching step may be carried out. It is possible to determine the borders with only one 2D image. The reason is that the lightsheet provides sufficient information of the volume that allows for identifying borders in multiple dimensions. This would not be the case with regular imaging, for example.

The optical system according to the present disclosure may comprise a/the sample stage and be configured to move the sample stage so as to obtain the scanning image data. Use of the sample stage movement allows to a wider range of motion than only using the optical component. The sample stage may be moved stepwise or continuously.

The optical system according to the present disclosure may comprise an/the optical component and may be configured to actuate the optical component, such as a galvanometer mirror, to move the light sheet so as to obtain the scanning image data. Such scanning is fast and precise compared to moving the sample stage.

According to the present disclosure, the processing of the scanning image data may comprise detecting of multiple objects and the proposed volume of interest, VOI, may be determined so as to comprise two or more of the multiple objects. To that end, when multiple objects are arranged subsequently along an axis, the proposed VOI may extend along said axis at least from a respective outermost border of the outermost of the multiple objects. For example, given an arrangement of said objects in a direction along said axis, the proposed VOI may extend at least from the beginning of the first object in said direction to the end of the last object in said direction.

According to the present disclosure the processor may be configured to automatically set the proposed volume of interest, VOI, as a VOI for use in subsequent procedures and/or to render the proposed volume of interest, VOI, or a derived volume derived from the proposed volume of interest, VOI, on a user interface, the user interface allowing for user input to set a VOI for subsequent procedures.

The user interface may comprise a display device, which is configured to render the proposed VOI, and an input device, configured to receive user input, particularly user input to set the VOI. The user input device and the display device may be integrally formed, for example as a touch display, or separately formed, for example as a display and a keyboard and/or mouse.

The volume derived from the proposed volume of interest may, for example, be derived by carrying out processing steps such as unskewing (also referred to as deskewing) and/or projections of the proposed volume of interest. This may allow for a rendering that shows a view that represents the VOI in a manner expected by a user. Prior to the unskewing and/or projection, rendering the image data may not yield a continuous representation of the real volume, which makes it difficult for a user to accurately select the VOI. Known methods for unskewing and/or projection may be employed.

The present disclosure also provides a method for determining a volume of interest, VOI, in a sample, the method comprising: processing scanning image data obtained by scanning through the sample with a lightsheet of an optical system for a lightsheet microscope, wherein processing the scanning image data comprises determining borders of an object in the scanning image data along at least two axes; and defining a proposed volume of interest, VOI, based on the determined borders such that the borders along each of the axes are included in the proposed volume of interest, VOI.

In particular, the optical system used in the method of the present disclosure may be an optical system according to the present disclosure, e.g. as outlined above or claimed.

In the method of the present disclosure, processing the scanning image data may comprise at least two of: determining a first border of the object in the sample in the scanning image data along a first axis X parallel to the sample surface and deriving, a beginning and an end of the object along the first axis, determining a second border of the object in the scanning image data along a second axis parallel Y to the sample surface and different from the first axis X and deriving a beginning and an end of the object along the second axis, and determining a third border of the object in the scanning image data along a third axis Z perpendicular to the sample surface and deriving a beginning and an end of the object along the third axis. In this example, defining the proposed volume of interest, VOI, may comprise defining a volume that extends at least from the beginning to the end of the object along the respective axis X, Y, Z as the proposed volume of interest, VOI.

In particular, in the method according to the present disclosure, defining the proposed volume of interest, VOI, may comprise defining a volume that extends at least from the beginning to the end of the object along each of the first axis X, the second axis Y, and the third axis Z.

In the method according to the present disclosure, the at least one scanning direction S may be parallel to at least one of the first axis X, the second axis Y, and the third axis Z.

In the method according to the present disclosure, the image data may comprise a first plurality of images acquired by moving a sample stage in a direction S parallel to a sample surface of the sample, thereby scanning through the sample with a lightsheet, and/or a second plurality of images acquired while moving the lightsheet by actuating one or more optical components to move the lightsheet through the sample.

In the method according to the present disclosure, the processing of the scanning image data may comprise stitching the images of the scanning image data and determining the borders of the object in the stitched volume.

Alternatively or in addition, in the method according to the present disclosure, processing the scanning image data may comprise determining the borders in each of at least one of the first plurality of images individually and/or determining the borders in each of at least one of the second plurality of images individually.

The method of the present disclosure may comprise obtaining the scanning image data.

In particular, the method of the present disclosure may comprise moving a sample stage so as to obtain the scanning image data and/or actuating the optical component to move the light sheet so as to obtain the scanning image data.

In the method according to the present disclosure, the processing of the scanning image data may comprise detecting of multiple objects and the proposed volume of interest, VOI, may be determined so as to comprise two or more of the multiple objects.

The method of the present disclosure may comprise automatically setting the proposed volume of interest, VOI, as a VOI for use in subsequent procedures and/or rendering the proposed volume of interest, VOI, or a derived volume derived from the proposed volume of interest, VOI, on a user interface, the user interface allowing for user input to set a VOI for subsequent procedures.

In the system and method of the present disclosure, machine learning or AI techniques may be employed for at least some of the steps, such as object detection and/or identifying borders of objects.

The present disclosure also provides a computer program with a program code for performing the method according to the present disclosure, particularly as outlined above.

The present disclosure also provides a computer-readable medium having stored thereon instructions which when carried out by a processor, cause the processor to perform the method according to the present disclosure, particularly as outlined above.

It is to be understood that the features and advantages described above in the context of the optical system similarly apply to the corresponding method, computer program, and computer-readable medium.

### SHORT DECSRIPTION OF THE FIGURES

In the following, the present disclosure is described with reference to the appended figures which give background explanations and represent specific embodiments of the present disclosure. The scope of the invention is however not limited to the specific features disclosed in the context of the figures, wherein:
Fig. 1a-1c are schematical representations of an optical system according to the present disclosure, a sample, and a volume of interest from two perspectives;
Fig. 2 is a schematical representation of a ligthsheet microscope comprising the optical system 100 according to the present disclosure;
Fig. 3 is a schematical representation of a method according to the present disclosure;
Fig. 4 illustrates an unskewing process;
Fig. 5 illustrates a system according to the present disclosure.

### DETAILED DESCRIPTION

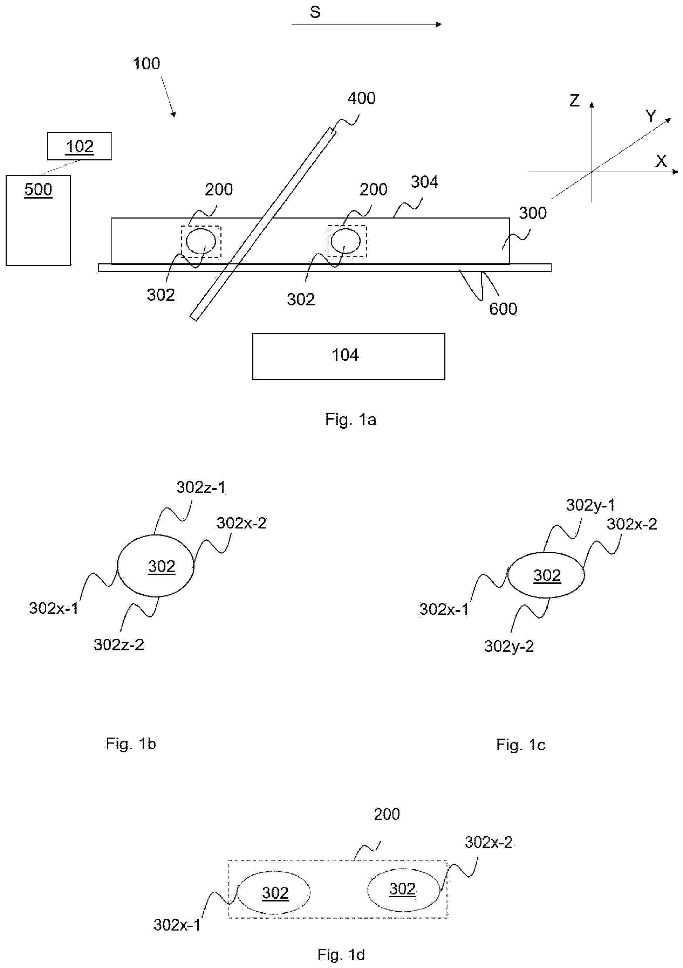

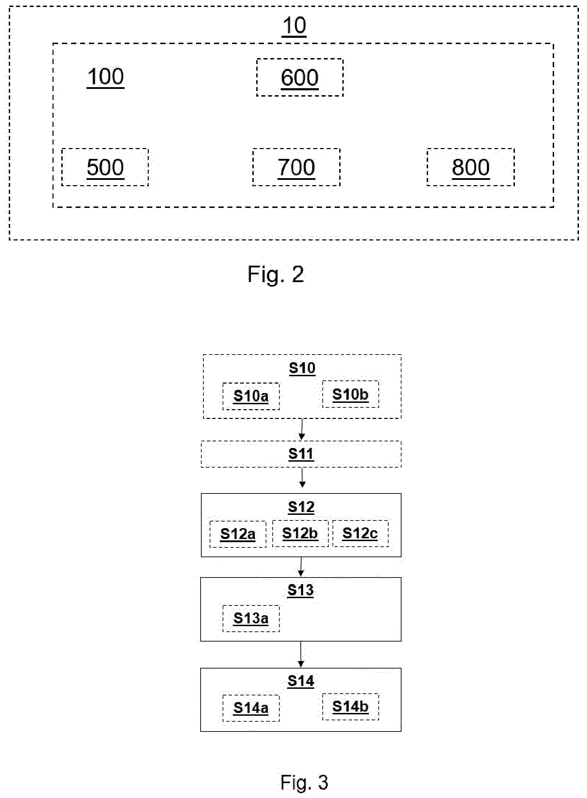

In Fig. 1a, an optical system 100 for a lightsheet microscope 10 (shown in Fig. 2) is shown, the optical system comprising a processor 102 configured to carry out a method for determining a volume of interest, VOI, 200 in a sample 300. For example, the processor may be configured to carry out any method according to the present disclosure, for example as described in the context of Fig. 3.

The sample and the VOI are shown for the sake of illustration, but they are not part of the optical system. The lightsheet microscope may, for example, be an oblique plane microscope, OPM, but may also be a microscope for other lightsheet imaging techniques. A lightsheet 400 provided by the lightsheet microscope is illustrated for the sake of illustration.

The optical system may optionally comprise a user interface 500, the user interface allowing for user input to set a VOI for subsequent procedures. The user interface may comprise a display device, which is configured to render the proposed VOI, and an input device, configured to receive user input, particularly user input to set the VOI. The user input device and the display device may be integrally formed, for example as a touch display, or separately formed, for example as a display and a keyboard and/or mouse.

The optical system may optionally comprise a sample stage 600 and may be configured to move the sample stage 600 so as to obtain scanning image data.

The optical system may optionally comprise an optical component 700, such as a galvanometer mirror, and may be configured to actuate the optical component to move a light sheet 400, by means of the optical component, so as to obtain the scanning image data.

The sample stage 600, the optical component 700, and optionally further components, such as 104, of the optical system that are employed in acquiring the scanning image data, may collectively be referred to as a scanning system.

The processor 102 is configured to process scanning image data obtained by scanning through the sample 300 with a lightsheet 400 in at least one scanning direction S, for example with the lightsheet oriented obliquely with respect to the sample surface304, as shown in Fig. 1a. The at least one scanning direction S may, as an example, be parallel to at least one of the first axis X, the second axis Y, and the third axis Z. In an example, the axes may be perpendicular to each other. At least one of them may be parallel to the scanning direction.

Processing the scanning image data comprises determining borders 302x, 302y, 302z of an object in the scanning image data along at least two axes. That is, a beginning and an end of the object may be determined for each of the at least two axes. This means that the determined borders may comprise two values per axis, representing the beginning and end coordinate of the object along said axis.

The processor is configured to define a proposed volume of interest, VOI, based on the determined borders 302x, 302y, 302z such that the borders 302x, 302y, 302z along each of the at least two axes X, Y, Z are included in the proposed volume of interest, VOI.

In some examples, the processor is configured to, as part of processing the scanning image data, determine the beginning and end of the object along each of the X and Z axes or along each of the Y and Z axes or along each of the X and Y axes. In another example, the beginning and end of the object is determined along each of the X, Y, and Z axes.

Specifically, the processor 102 may be configured to, as part of the processing the scanning image data, carry out at least two of: determining a first border 302x of an object 302 in the sample 300 in the scanning image data along a first axis X parallel to the sample surface 304 and deriving, a beginning 302x-1 and an end 302x-2 of the object 302 along the first axis X, determining a second border 302y of the object 302 in the scanning image data along a second axis parallel Y to the sample surface 304 and different from the first axis X and deriving a beginning 302y-1 and an end 302y-2 of the object 302 along the second axis Y, and determining a third border 302z of the object 302 in the scanning image data along a third axis Z perpendicular to the sample surface 304 and deriving a beginning 302z-1 and an end 302z-2 of the object 302 along the third axis Z.

In this example, the processor 102 may be configured to define the proposed VOI, wherein defining the proposed volume of interest, VOI, comprises defining a volume that extends at least from the beginning 302x-1, 302y-1, 302z-1 to the end 302x-2, 302y-2, 302z-2 of the object 302 along the respective axis X, Y, Z as the proposed volume of interest, VOI. That is, the

For example, the processor may be configured to, as part of defining the proposed volume of interest, VOI, define a volume that extends at least from the beginning 302x-1, 302y-1, 302z-1 to the end 302x-2, 302y-2, 302z-2 of the object 302 along each of the first axis X, the second axis Y, and the third axis Z. In other words, the proposed volume of interest may be defined in three dimensions spanned by the axes X, Y, and Z. Alternatively, only two dimensions, such as along the Z and one of the X and Y axis may be defined.

The scanning image data may comprise a first plurality of images acquired by moving the sample stage 600 in a direction S parallel to a sample surface 304 of the sample 300, thereby scanning through the sample 300 with a lightsheet 400, and/or a second plurality of images acquired while moving the lightsheet 400 by actuating the one or more optical components 700, e.g. galvanometer mirror, to move the lightsheet 400 through the sample 300.

In this example, the processor 102 may be configured to, as part of processing the scanning image data, stitch the images of the scanning image data and determine the borders of the object 302 in the stitched volume. Alternatively or in addition, in this example, the processor 102 may be configured to, as part of the processing of the scanning image data, determine the borders in each of at least one of the first plurality of images individually, and/or determine the borders in each of at least one of of the second plurality of images individually.

The processor 102 may be configured to, as part of processing the scanning image data, detect multiple objects 302 and to determine the proposed volume of interest, VOI, so as to comprise two or more of the multiple objects 302, as illustrated for example in Fig. 1d.

The processor may be configured automatically set the proposed volume of interest, VOI, as a VOI for use in subsequent procedures and/or render the proposed volume of interest, VOI, or a derived volume derived from the proposed volume of interest, VOI, on the user interface 500 described above, and/or to receive user input to set a VOI for subsequent procedures. The processor may be configured to carry out processing such as projections and/or unskewing of the proposed VOI prior to rendering, thereby obtaining a derived volume derived from the volume of interest for rendering.

**Fig. 1b** illustrates, for the sake of understanding the above features, a potential volume of interest 302 and its beginnings and ends in the X and the Z direction (side view or vertical cross-section). **Fig. 1c** illustrates the potential volume of interest 302 and its beginnings and ends in the X and Y direction (top view or horizontal cross-section). **Fig. 1d** illustrates an exemplary case where two objects arranged along the X axis are to be included in the volume of interest. In this example, the proposed volume of interest extends at least from the beginning 302x-1 of a first object (shown on the left) and the end of a second object 203x-2 (shown on the right) along the X axis.

The present disclosure also provides a lightsheet microscope 10 comprising the optical system 100 as shown in Fig. 1a. Such a microscope is shown in **Fig. 2****.**

The present disclosure also provides a method for determining a volume of interest, VOI, 200 in a sample 300. An exemplary method is described below and illustrated in **Fig. 3****.**

As an example, the optical system used in the method of the present disclosure may be an optical system according to the present disclosure, e.g. as outlined in the context of Figs. 1a, 1b, and 2 or as claimed.

The method comprises, in step S12, processing scanning image data obtained by scanning through the sample 300 with a lightsheet 400 of an optical system 100 for a lightsheet microscope 10, wherein processing the scanning image data comprises determining borders 302x, 302y, 302z of an object 302 in the scanning image data along at least two axes X, Y, Z. Borders for only one or for multiple objects may be determined.

Known image processing methods for object detection may be employed for determining the borders of the object. Such methods may rely on different parameters associated with neighboring pixels. Objects may be determined using focus-based and/or contrast-based image processing techniques. Machine learning may also be employed for object detection.

The method further comprises, in step S13, defining a proposed volume of interest, VOI, based on the determined borders such that the borders along each of the axes are included in the proposed volume of interest, VOI.

Step S12 of processing the scanning image data may comprise determining beginning and end of the object in at least two directions, i.e., along the at least two axes. One of the axes may, in a non-limiting example, be parallel to the scanning direction S.

The VOI may then be defined by defining a volume that extends at least from the respective beginning to the respective end of the object. It may not be necessary to define the borders of the volume of interest in further directions or the borders of the volume of interest may be defined in at least some further directions by using a predefined shape of the volume of interest, such as cuboid or spherical, and sizing it so as to comprise the beginnings and ends at its borders.

As an example, to do so, step S12 of processing the scanning image data may comprise, in an example, at least two of the following steps S12a to S12c:

Step S12a includes determining a first border 302x of the object 302 in the sample 300 in the scanning image data along a first axis X parallel to the sample surface 304 and deriving, a beginning 302x-1 and an end 302x-2 of the object 302 along the first axis X.

Step S12b includes determining a second border 302y of the object 302 in the scanning image data along a second axis parallel Y to the sample surface 304 and different from the first axis X and deriving a beginning 302y-1 and an end 302y-2 of the object 302 along the second axis Y.

Step S12b includes determining a third border 302z of the object 302 in the scanning image data along a third axis Z perpendicular to the sample surface 304 and deriving a beginning 302z-1 and an end 302z-2 of the object 302 along the third axis Z.

For example, the determination may be made for the X and Z axis, or for the Y and Z axis, or for the X and Y axis, or for all three of the X, Y, and Z axis, respectively.

After applying at least two of steps S12a, S12b, and S12c, the volume of interest may be defined in step S13 of defining the proposed volume of interest, VOI, which may then comprise, in step S13a defining a volume that extends at least from the beginning 302x-1, 302y-1, 302z-1 to the end 302x-2, 302y-2, 302z-2 of the object 302 along the respective axis X, Y, Z as the proposed volume of interest, VOI, particularly each of the axes.

Step S12 of processing of the scanning image data may comprise detecting multiple objects 302 and step S13 of determining the proposed volume of interest, VOI, may be determined so as to comprise two or more of the multiple objects 302. In this case, as an example, in steps 12a, 12b, and/or 12c, in a direction extending along the first, second, and/or third axis respectively, the beginning of the first object and the end of the last object of the two or more of the multiple objects to be included in the proposed VOI andarranged along the respective direction may be determined. Further, in this case, as an example, in step S13a, the proposed volume of interest, VOI, may be determined so as to extend at least from the beginning of the first object to the end of the last object along the respective direction.

In an optional step S10, the scanning image data may be received directly from a scanning process and/or retrieved from a data storage system, which may be a local and/or remote system, and may optionally be a distributed system.

Prior to step S11, in optional step S10, scanning image data may be obtained.

Specifically, in optional step S10a, the sample stage 600 may be moved so as to obtain the scanning image data. The scanning direction S may be parallel to a sample surface of the sample. A sample stage 600, e.g. as shown in the context of Fig. 1a or Fig. 2 may be used. Alternatively or in addition to step S10a, in optional step S10b, the light sheet 400 itself may be moved so as to obtain the scanning image data. This may be done, as an example, by actuating an optical component 700, such as a galvanometer mirror, to move the light sheet. To that end, an optical component such as described in the context of Figs. 1a or 2 may be used.

In this manner scanning image data may comprise a first plurality of images acquired by moving, in an optional step S10a, the sample stage 600 in a direction S parallel to a sample surface 304 of the sample 300, thereby scanning through the sample 300 with a lightsheet 400 and/or a second plurality of images acquired while moving, in an optional step S10b, the lightsheet 400 by actuating one or more optical components 700 to move the lightsheet 400 through the sample 300.

In an example, the optical component, e.g. the galvanometer mirror, may be driven continuously and the stage can be moved stepwise. During each respective dead time of the stage, scanning by moving the lightsheet by actuating the optical component may be carried out.

The scanning may, thus, yield a plurality of subsequent images along the scanning direction. In this case, the processing of the scanning image data may comprise, in optional step S12c, stitching the images of the scanning image data. In this case, determining the borders of the object 302 may be carried out in the stitched volume. Stitching techniques known in the art may be used.

Alternatively or in addition, the borders may be determined in each of a subset of the first plurality of images determining the borders individually, in particular in at least one of the first plurality of images. Similarly, the borders may be determined in each of a subset of the second plurality of images determining the borders individually, in particular in at least one of the second plurality of images.

After determining the proposed volume of interest, VOI, the method may comprise, in optional step S14, automatically setting, in step S14a, the proposed volume of interest, VOI, as a VOI for use in subsequent procedures, e.g. analysis of the sample in the VOI by microscopy employing, for example, the lightsheet microscope described above. Alternatively or in addition, the step S14 may comprise, in step S14b, rendering the proposed volume of interest, VOI, or a derived volume derived from the proposed volume of interest, VOI, on a user interface 500, the user interface 500 allowing for user input to set a VOI for subsequent procedures. This may be done using the user interface as described in the context of Fig. 1a.

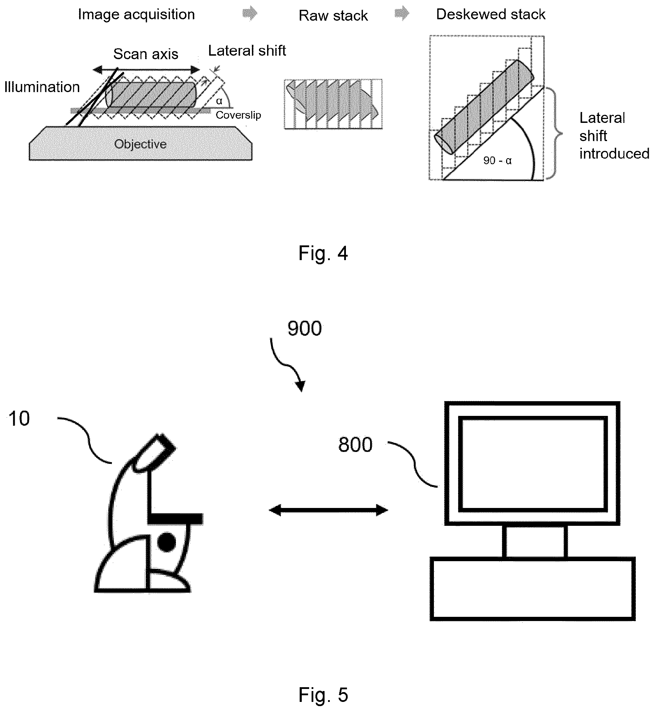

Prior to rendering the proposed VOI, the scanning imaged data may be processed, which may comprise image projection and/or unskewing of the image data. This may allow for the user to interact with the VOI in a view that the user is acquainted with. This is illustrated in Fig. 4, merely as an example. Unskewing of the image data may entail that the obliquely acquired images of the image data are processed, e.g. positionally shifted and/or rotated such that, when stacked, they form a continuous and undistorted representation of the depicted volume. Projection of the image data may comprise projecting volumetric image data into a 2D projection, for example to allow for rendering on a display. After user selection of a VOI by user input via a user input, a reconstruction into volumetric image data may be carried out. Methods for unskewing, projection, and reconstruction as known in the art may be employed. Accordingly, a detailed description is omitted herein.

In the optical system and method, machine learning or Al techniques may be employed for at least some of the steps, such as object detection and/or identifying borders of objects.

The present disclosure also provides a computer program with a program code for performing the method according to the present disclosure, particularly as outlined above.

The present disclosure also provides a computer-readable medium having stored thereon instructions which when carried out by a processor, cause the processor to perform the method according to the present disclosure, particularly as outlined above.

The present disclosure provides a system 900 with a microscope 10, e.g. as shown in Fig. 2, and a computing device 800. Such a system is shown in Fig. 5.

In the present disclosure, some embodiments relate to a microscope 10 comprising the optical system100 as described in connection with Figs. 1a and 2. The microscope may be part of or connected to a system 900 as shown in Fig. 5. Figs. 1a and 2 show a schematic illustration of an optical system 100 and a microscope 10 comprising the system 100, respectively configured to perform a method described herein, particularly by means of a/the processor 102. The system 900, particularly the optical system, comprises the processor 102. The processor may be part of a computing device 800. The microscope 10 and/or system 900 is configured to take images, particularly scanning to acquire the scanning image data and may be connected to the computing device 800. The computing device 800, particularly the processor 102, is configured to execute at least a part of a method described herein. The computing device 800, particularly the processor, may be configured to execute a machine learning algorithm. The computing device 800 and microscope 10 may be completely or partially separate entities but can also be integrated together in one common housing. The computing device 800 may be part of a central processing system of the microscope 10 and/or the computing device 800 may be part of a subcomponent of the microscope 104, such as a sensor, an actor, a camera or an illumination unit, etc. of the microscope 104.

The computing device 800 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computing device 800 may comprise any circuit or combination of circuits. In one embodiment, the computing device 800 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computing device 800 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. computing device 800 may include one or more storage devices or data storages, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computing device 800 may also include a display device, one or more speakers, and a keyboard and/or controller, which can include a mouse, trackball, touch screen, voice-recognition device, or any other device that permits a system user to input information into and receive information from the computing device 800.

Some or all of the method steps may be executed by (or using) a hardware apparatus, like for example, a processor, a microprocessor, a programmable computer or an electronic circuit. In some embodiments, some one or more of the most important method steps may be executed by such an apparatus or computing device.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system or computing device, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus, computing device or microscopy system as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer, computing device, computer system or a programmable logic device, configured to, or adapted to, perform one of the methods described herein.

A further embodiment comprises a computer or computing device having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, computing device, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be pre-processed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine- learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### LIST OF REFERENCE SIGNS

- 10: lightsheet microscope
- 100: optical system
- 102: processor
- 104: further component
- 200: volume of interest
- 300: sample
- 304: sample surface
- 302x, 302y, 302z: borders
- 302x-1, 302y-1, 302z-1: beginning of the object
- 302x-2, 302y-2, 302z-2: end of the object
- 400: lightsheet
- 500: user interface
- 600: sample stage
- 700: optical components
- 800: computing device
- 900: system
- S: scanning direction
- X, Y, Z: axes

## Claims

1. Optical system (100) for a lightsheet microscope (10) the optical system comprising a processor (102) configured to carry out a method for determining a volume of interest, VOI, (200) in a sample (300), the method comprising:
processing scanning image data obtained by scanning through the sample (300) with a lightsheet (400) in at least one scanning direction (S), wherein processing the scanning image data comprises determining borders (302x, 302y, 302z) of an object in the scanning image data along at least two axes; and
defining a proposed volume of interest, VOI, based on the determined borders (302x, 302y, 302z) such that the borders (302x, 302y, 302z) along each of the at least two axes (X, Y, Z) are included in the proposed volume of interest, VOI.

2. Optical system (100) according to claim 1,
wherein processing the scanning image data comprises at least two of:
determining a first border (302x) of the object (302) in the sample (300) in the scanning image data along a first axis (X) parallel to the sample surface (304) and deriving, a beginning (302x-1) and an end (302x-2) of the object (302) along the first axis (X),
determining a second border (302y) of the object (302) in the scanning image data along a second axis parallel (Y) to the sample surface (304) and different from the first axis (X) and deriving a beginning (302y-1) and an end (302y-2) of the object (302) along the second axis (Y), and
determining a third border (302z) of the object (302) in the scanning image data along a third axis (Z) perpendicular to the sample surface (304) and deriving a beginning (302z-1) and an end (302z-2) of the object (302) along the third axis (Z); and
wherein defining the proposed volume of interest, VOI, comprises defining a volume that extends at least from the beginning (302x-1, 302y-1, 302z-1) to the end (302x-2, 302y-2, 302z-2) of the object (302) along the respective axis (X, Y, Z) as the proposed volume of interest, VOI.

3. Optical system (100) according to claim 2, wherein defining the proposed volume of interest, VOI, comprises defining a volume that extends at least from the beginning (302x-1, 302y-1, 302z-1) to the end (302x-2, 302y-2, 302z-2) of the object (302) along each of the first axis (X), the second axis (Y), and the third axis (Z).

4. Optical system (100) according to claim 2 or 3, wherein the at least one scanning direction (S) is parallel to at least one of the first axis (X), the second axis (Y), and the third axis (Z).

5. Optical system (100) according to any of the preceding claims, wherein the scanning image data comprises at least one of:
a first plurality of images acquired by moving a sample stage (600) in a direction (S) parallel to a sample surface (304) of the sample (300), thereby scanning through the sample (300) with a lightsheet (400),
a second plurality of images acquired while moving the lightsheet (400) by actuating one or more optical components (700) to move the lightsheet (400) through the sample (300).

6. Optical system (100) according to claim 5, wherein the processing of the scanning image data comprises stitching the images of the scanning image data and determining the borders of the object (302) in the stitched volume.

7. Optical system (100) according to any of claims 5 or 6, wherein processing the scanning image data comprises at least one of:
determining the borders in each of at least one of the first plurality of images individually,
determining the borders in each of at least one of the second plurality of images individually.

8. Optical system (100) according to any of the preceding claims, comprising a/the sample stage (600) and configured to move the sample stage (600) so as to obtain the scanning image data.

9. Optical system (100) according to any of the preceding claims, comprising an/the optical component (700) and configured to actuate the optical component (700) to move the light sheet (400) so as to obtain the scanning image data.

10. Optical system (100) according to any of the preceding claims, wherein the processing of the scanning image data comprises detecting of multiple objects (302) and the proposed volume of interest, VOI, is determined so as to comprise two or more of the multiple objects (302).

11. Optical system (100) according to any of the preceding claims, wherein the processor is configured to at least one of:
automatically set the proposed volume of interest, VOI, as a VOI for use in subsequent procedures;
render the proposed volume of interest, VOI, or a derived volume derived from the proposed volume of interest, VOI, on a user interface (500), the user interface (500) allowing for user input to set a VOI for subsequent procedures.

12. Method for determining a volume of interest, VOI, (200) in a sample (300), the method comprising:
processing (S12) scanning image data obtained by scanning through the sample (300) with a lightsheet (400) of an optical system (100) for a lightsheet microscope (10), wherein processing the scanning image data comprises determining borders (302x, 302y, 302z) of an object (302) in the scanning image data along at least two axes (X, Y, Z); and
defining (S13) a proposed volume of interest, VOI, based on the determined borders such that the borders along each of the axes are included in the proposed volume of interest, VOI.

13. The method of claim 12, wherein optical system (100) is an optical system (100) according to any of claims 1 to 11.

14. Computer program with a program code for performing the method according to claim 12 or 13 when the computer program is run on a processor.

15. Computer-readable medium having stored thereon instructions which when carried out by a processor, cause the processor to perform the method according to claim 12 or 13.
